# EUROPÄISCHE PATENTSCHRIFT

(11) **EP 2 614 869 B1**
(45) Veröffentlichungstag und Bekanntmachung des Hinweises auf die Patenterteilung: **03.08.2016**
(21) Anmeldenummer: 12151107.5
(22) Anmeldetag: 13.01.2012
(51) Int. Cl.: F02M 37/22, B01D 36/00

(54) **Flüssigkeitsfilter**
Liquid filter
Filtre de liquide

(43) Veröffentlichungstag der Anmeldung: 17.07.2013
(73) Patentinhaber: MAHLE International GmbH, 70376 Stuttgart (DE)
(72) Erfinder: Pfeffer, Andreas, 70176 Stuttgart (DE)
(74) Vertreter: BRP Renaud & Partner mbB Rechtsanwälte Patentanwälte Steuerberater

(56) Entgegenhaltungen:
- EP-A1- 2 295 127
- EP-A2- 2 239 034
- WO-A2-2006/067618
- DE-A1-102009 032 036
- DE-A1-102010 031 341

## Beschreibung

Die vorliegende Erfindung betrifft einen Flüssigkeitsfilter mit einem Filtergehäuse, das einen Aufnahmeraum für ein darin eingesetztes Ringfilterelement zum Filtern einer Flüssigkeit enthält, gemäß dem Oberbegriff des Anspruchs 1.

Aus der EP 2 181 747 A1 ist ein gattungsgemäßes Flüssigkeitsfilter mit einem zentral angeordneten Wasserstandsensor bekannt, der durch einen Filtergehäusedeckel und einen Innenraum eines Ringfilterelements in einen darunter angeordneten Wassersammelraum hineinragt.

Aus der EP 1 400 271 A1 sowie aus der EP 2 181 747 A1 und DE 10 2009 032 036 A1 sind weitere Filtereinrichtungen bekannt, bei welchen beispielsweise ein Sensor über eine Steckverbindung mit dem Filtergehäusedeckel verbunden ist.

Nachteilig bei den bekannten Ausführungsformen der Flüssigkeitsfilter sind jedoch eine vergleichsweise aufwändige Montage der entsprechenden Sensoren sowie eine insbesondere im Hinblick auf eine Abdichtung aufwändige elektrische Kontaktierung derselben.

Die vorliegende Erfindung beschäftigt sich daher mit dem Problem, für ein Flüssigkeitsfilter der gattungsgemäßen Art eine verbesserte Ausführungsform anzugeben, die sich insbesondere durch einen geringen Montageaufwand und eine vereinfachte elektrische Kontaktierung von Sensoren auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen Wasserstandssensor zur Ermittlung eines Wasserstandes in einem Wassersammelraum eines Flüssigkeitsfilters zumindest teilweise in einen aus Kunststoff ausgebildeten Filtergehäusedeckel des Flüssigkeitsfilters zu integrieren und insbesondere dessen elektrische Leitungen vorzugsweise vollständig, zumindest aber weitestgehend, in den Kunststoff des Filtergehäusedeckels einzubetten. "Vollständig" soll in diesem Zusammenhang heißen, dass die Leitungen beispielsweise beim Umspritzen in einer Spritzgussform mittels Haltern gehalten sind, die dann selbstverständlich eine Verbindung der Leitungen nach außen bewirken. Denkbar ist hierbei aber auch dass diese Verbindung nachträglich verschlossen wird oder aber sogenannte Opfer-/Einmalhalter verwendet werden, die im Spritzgussformling verbleiben. Das Flüssigkeitsfilter weist dabei den genannten Filtergehäusedeckel auf, der zusammen mit einem Filtergehäusetopf ein Filtergehäuse bildet, in welchem ein Aufnahmeraum für ein darin eingesetztes Ringfilterelement zum Filtern der Flüssigkeit vorgesehen ist. Unterhalb des Ringfilterelements ist dabei der Wassersammelraum zum Sammeln von aus der Flüssigkeit abgeschiedenem Wasser vorgesehen, wobei der Wasserstandssensor durch den Filtergehäusedeckel und einen Innenraum des Ringfilterelementes in den Wassersammelraum hineinragt und über elektrische Leitungen mit einer Koppelstelle verbunden ist. Erfindungsgemäß sind nun die elektrischen Leitungen und der Wasserstandsensor zumindest teilweise in den Kunststoff des Filtergehäusedeckels eingebettet bzw. mit dem Kunststoff desselben umspritzt, wobei zusätzlich zumindest ein weiteres elektrisches Funktionselement vorgesehen ist, das ebenfalls über diese Koppelstelle elektrisch gekoppelt ist. Das erfindungsgemäße Flüssigkeitsfilter besitzt somit im Unterschied zu bekannten Flüssigkeitsfiltern den großen Vorteil, dass der Wasserstandssensor und dessen elektrische Leitungen durch die Einbettung in den Kunststoff des Filtergehäusedeckels geschützt angeordnet sind, wobei zugleich ein Montageaufwand entfallen kann, da der Wasserstandssensor und dessen elektrische Leitungen nicht mehr beim Zusammenbau des Flüssigkeitsfilters separat montiert werden müssen, sondern bereits beim Spritzen des Filtergehäusedeckels mit eingespritzt und damit vormontiert werden. Durch den Umstand, dass die Koppelstelle nicht nur für die elektrische Kontaktierung des Wasserstandsensors mit beispielsweise einer Motorsteuerung genutzt wird, sondern zugleich auch für eine Kontaktierung zumindest eines weiteren elektrischen Funktionselementes, lässt sich die Anzahl der Steckkontakte reduzieren und damit auch der elektrische Anschluss des Flüssigkeitsfilters vereinfachen, da vorzugsweise lediglich ein einziger Steckkontakt an der Koppelstelle geschlossen werden muss, um sämtliche elektrische Bauteile, beispielsweise Wasserstandssensoren, Drucksensoren, Heizeinrichtungen, etc. zu kontaktieren.

Bei einer weiteren vorteilhaften Ausführungsform der erfindungsgemäßen Lösung ist die Koppelstelle zumindest teilweise in den Kunststoff des Filtergehäusedeckels eingebettet. Dies bietet den großen Vorteil, dass nicht nur die elektrischen Leitungen und der Wasserstandssensor, sondern zugleich auch die Koppelstelle beim Spritzen des Filtergehäusedeckels vormontiert wird, wodurch ein nachträglicher Montageaufwand zur Fixierung der Koppelstelle entfallen kann.

Bei einer weiteren vorteilhaften Ausführungsform der erfindungsgemäßen Lösung, verwenden der Wasserstandssensor und zumindest eines der weiteren elektrischen Funktionselemente eine gemeinsame Masseleitung. Hierdurch kann die Anzahl der Leitungen innerhalb des Filtergehäusedeckels reduziert werden, wobei vorzugsweise denkbar ist, dass sämtliche elektrische Funktionselemente und der Wasserstandssensor eine gemeinsame Masseleitung verwenden, wodurch der Leitungsaufwand nochmals deutlich reduziert werden kann. Der Wasserstandssensor und die anderen elektrischen Funktionselement sind dabei somit parallel geschaltet und können beispielsweise über eine digitale Codierung individuell angesteuert werden.

Weitere wichtige Merkmale und Vorteile der erfindungsgemäßen Vorrichtung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Dabei zeigen, jeweils schematisch,
- Fig. 1: eine Schnittdarstellung durch ein erfindungsgemäßes Flüssigkeitsfilter,
- Fig. 2: eine mögliche elektrische Schaltung eines Wasserstandsensors sowie weiterer elektrischer Funktionselemente im erfindungsgemäßen Flüssigkeitsfilter,
- Fig. 3: eine mögliche Ausführungsform eines erfindungsgemäßen Wasserstandssensor.

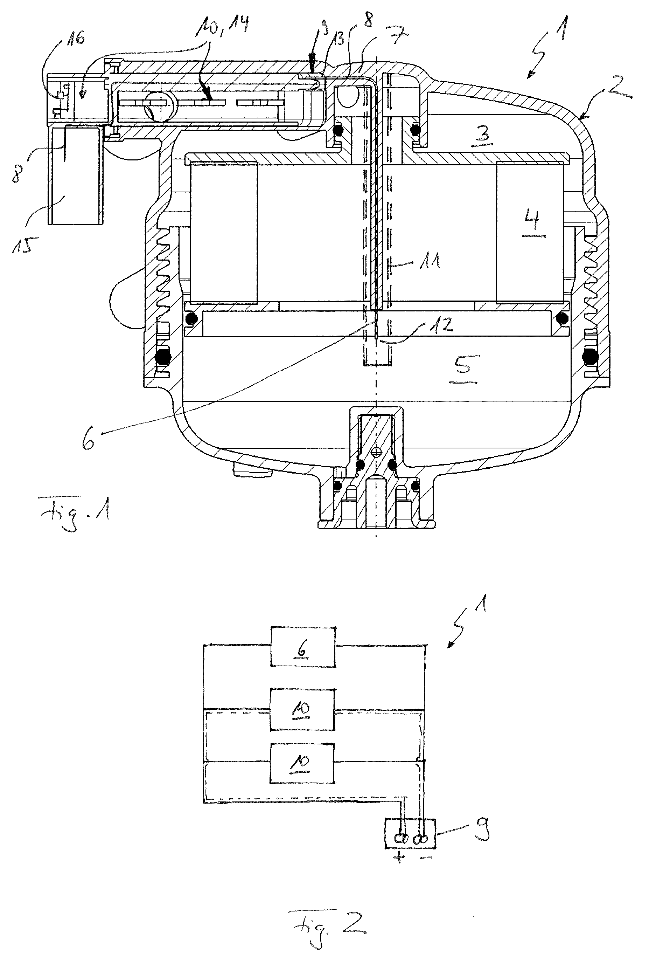

Entsprechend der Fig. 1, weist ein erfindungsgemäßes Flüssigkeitsfilter 1, das beispielsweise als Kraftstoff- oder Schmierstofffilter ausgebildet ist, ein Filtergehäuse 2 mit einem Aufnahmeraum 3 für ein darin eingesetztes Ringfilterelement 4 zum Filtern einer Flüssigkeit auf. Unterhalb des Ringfilterelementes 4 ist dabei ein Wassersammelraum 5 angeordnet zum Sammeln von aus der Flüssigkeit abgeschiedenem Wasser. Ebenfalls vorgesehen ist ein Wasserstandssensor 6, der durch einen Filtergehäusedeckel 7 des Filtergehäuses 2 in den Wassersammelraum 5 hineinragt und der über elektrische Leitungen 8 mit einer Koppelstelle 9 (vgl. auch Fig. 2) verbunden ist. Die elektrischen Leitungen 8 sind dabei erfindungsgemäß vorzugsweise vollständig, zumindest aber weitestgehend, und der Wasserstandssensor 6 zumindest teilweise in den Kunststoff des Filtergehäusedeckels 7 eingebettet bzw. mit dem Kunststoff des Filtergehäusedeckels 7 umspritzt und dadurch geschützt angeordnet. Zugleich ist in dem erfindungsgemäßen Flüssigkeitsfilter 1 zumindest ein weiteres elektrisches Funktionselement 10 vorgesehen, das ebenfalls über die Koppelstelle 9 elektrisch gekoppelt ist. Das zumindest eine weitere Funktionselement 10 kann dabei beispielsweise als Heizeinrichtung 14, als Drucksensor oder als Temperatursensor ausgebildet sein und verwendet vorzugsweise dieselbe Masseleitung wie der Wasserstandsensor 6, wodurch der konstruktive Aufwand der Verkabelung deutlich reduziert werden kann. Betrachtet man die Fig. 1, so kann man erkennen, dass im Bereich der Heizeinrichtung 14, bzw. des weiteren Funktionselements 10 eine Auswerteinheit 16, insbesondere in der Art einer Platine, vorgesehen sein kann, die die vom Wasserstandsensor 6 erfassten Sensordaten auswertet und an beispielsweise die Motorsteuerung weiterleitet, oder dass das weitere Funktionselement 10 als Auswerteeinheit 16 ausgebildet ist. Der Wasserstandsensor 6 bildet dabei eine Messgrößenaufnahme.

Gemäß der Fig. 1 ist die Heizeinrichtung 14 als Koppelstück ausgebildet und verbindet die Koppelstelle 9 des Flüssigfilters 1 mit beispielsweise einem Motorsteuergerät. Der Wasserstandsensor 6 ist somit über die Heizeinrichtung 14 mit der Fahrzeugelektrik, insbesondere mit dem Motorsteuergerät verbunden. Die Leitungen 8 verlaufen in diesem Fall innerhalb der Heizeinrichtung 14 bis zu einer Kupplung 15 weiter. Das zumindest eine weitere Funktionselement 10 kann alternativ auch zumindest teilweise in den Kunststoff des Filtergehäusedeckels 7 eingebettet bzw. von diesem umspritzt sein. Die elektrische Leitung 8, die den Wasserstandssensor 6 mit der elektrischen Koppelstelle 9 elektrisch verbindet ist dabei vorzugsweise vollständig in den Kunststoff des Filtergehäusedeckels 7 eingebettet bzw. von diesem umspritzt und dadurch besonders geschützt angeordnet.

Durch das Einbetten zumindest des Wasserstandsensors 6 in den Kunststoff des Filtergehäusedeckels 7 kann auf eine separate Montage, verbunden mit damit einhergehenden Montagekosten, entfallen, wodurch nicht nur der Montageaufwand reduziert, sondern zugleich auch die Funktionssicherheit erhöht werden kann, da Montagefehler ausgeschlossen werden können. Durch die Einbettung der Leitungen 8 in den Kunststoff des Filtergehäusedeckels 7 sind diese auch besonders geschützt angeordnet, was ebenfalls zu einer Steigerung der Funktionssicherheit des Flüssigkeitsfilters 1 beiträgt.

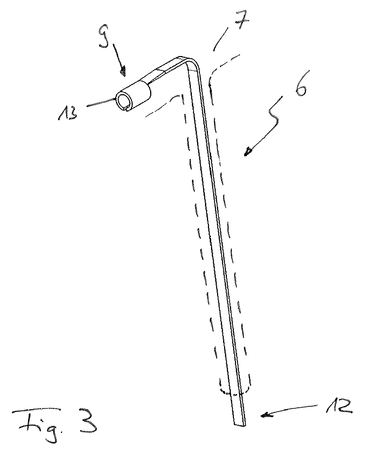

Ebenso wie die Leitungen 8 kann auch die Koppelstelle 9 zumindest teilweise in den Kunststoff des Filtergehäusedeckels 7 eingebettet bzw. von diesem umspritzt sein, wodurch auch hier ein separater Montageaufwand zur Fixierung der Koppelstelle 9 am Filtergehäusedeckel 7 verbunden mit den damit einhergehenden Kosten vermieden werden kann. Ebenfalls einstückig mit dem Filtergehäusedeckel 7 ausgebildet ist ein in den Innenraum des Ringfilterelements 4 und zumindest teilweise in den Wassersammelraum 5 hineinragendes Standrohr 11, innerhalb welchem der Wasserstandssensor 6 geführt und zugleich geschützt angeordnet ist. Das Standrohr 11 ist lediglich mit unterbrochen gezeichneter Linie dargestellt. Das zumindest eine weitere Funktionselement 10 ist dabei in der Fig. 1 lediglich rein exemplarisch eingezeichnet, so dass diese selbstverständlich auch an anderer Stelle angeordnet bzw. vorgesehen sein kann. Generell ist der Wasserstandssensor 6 vorzugsweise lanzenartig ausgebildet, wie dies auch der Fig. 3 eindeutig zu entnehmen ist. Der Wasserstandssensor 6 ist dabei vorzugsweise bis kurz vor seinem freien Ende 12 in den Kunststoff des Filtergehäusedeckels 7 eingespritzt und dies bis zur Koppelstelle 9. Betrachtet man die Fig. 2, so kann man erkennen, dass neben dem Wasserstandssensor 6 weitere Funktionselemente 10 parallel geschaltet sein können, wobei sowohl der Wasserstandssensor 6 als auch die weiteren Funktionselemente 10, beispielsweise die Heizeinrichtung 14, über lediglich eine einzige gemeinsame Koppelstelle 9, insbesondere mit einer Motorsteuerung eines Verbrennungsmotors eines Kraftfahrzeuges, gekoppelt sind. Eine individuelle Ansteuerung bzw. Erfassung des Wasserstandsensors 6 bzw. der weiteren Funktionselemente 10 kann beispielsweise über eine digitale Codierung erfolgen. Selbstverständlich ist auch denkbar, dass das oder die weiteren Funktionselemente 10 separate Leitungen besitzen.

Betrachtet man den Wasserstandssensor 6 gemäß der Fig. 3, so kann man dessen lanzenförmige Gestalt leicht erkennen, wobei der Wasserstandssensor 6 abgewinkelt ausgebildet ist und im Bereich seiner Koppelstelle 9 eine Kupplung 13 zur Kopplung mit einem komplementär dazu ausgebildeten Stecker, der beispielsweise an der Heizeinrichtung 14 angeordnet ist, besitzt.

Mit dem erfindungsgemäßen Flüssigkeitsfilter 1 ist nicht nur eine deutlich vereinfachte Anordnung und damit auch Vormontage des Wasserstandsensors 6 in den Filtergehäusedeckel 7 möglich, sondern zugleich auch eine besonders einfache elektrische Kontaktierung, da über eine einzige, gemeinsame Koppelstelle 9 nicht nur der Wasserstandssenor 6, sondern auch noch nahezu beliebig viele weitere elektrische Funktionselemente 10 elektrisch versorgt und/oder angesteuert werden können.

## Patentansprüche

1. Flüssigkeitsfilter (1)
- mit einem Filtergehäusedeckel (7) aus Kunststoff, das einen Aufnahmeraum (3) für ein darin eingesetztes Ringfilterelement (4) zum Filtern einer Flüssigkeit enthält,
- mit einem unterhalb des Ringfilterelements (4) angeordneten Wassersammelraum (5) zum Sammeln von aus der Flüssigkeit abgeschiedenem Wasser,
- mit einem Wasserstandsensor (6), der durch den Filtergehäusedeckel (7) und einen Innenraum des Ringfilterelements (4) in den Wassersammelraum (5) ragt, und der über elektrische Leitungen (8) mit einer Koppelstelle (9) verbunden ist,
- wobei am Filtergehäusedeckel (7) ein in den Innenraum des Ringfilterelements (4) und zumindest teilweise in den Wassersammelraum (5) hineinragendes Standrohr (11) angeordnet ist, innerhalb welchem der Wasserstandsensor (6) geführt ist,
- wobei zumindest ein weiteres elektrisches Funktionselement (10) vorgesehen ist, das ebenfalls über die Koppelstelle (9) elektrisch gekoppelt ist,
**dadurch gekennzeichnet,**
- **dass** die elektrischen Leitungen (8) und der Wasserstandsensor (6) zumindest teilweise in den Kunststoff des Filtergehäusedeckels (7) eingebettet bzw. mit dem Kunststoff des Filtergehäusedeckels (7) umspritzt sind,
- **dass** das Standrohr (11) einstückig mit dem Filtergehäusedeckel (7) ausgebildet ist.

2. Flüssigkeitsfilter nach Anspruch 1,
**dadurch gekennzeichnet,**
**dass** das zumindest eine weitere Funktionselement (10) als Heizeinrichtung, als Drucksensor oder als Temperatursensor ausgebildet ist.

3. Flüssigkeitsfilter nach Anspruch 1 oder 2,
**dadurch gekennzeichnet,**
**dass** die Koppelstelle (9) zumindest teilweise in den Kunststoff des Filtergehäusedeckels (7) eingebettet ist.

4. Flüssigkeitsfilter nach einem der Ansprüche 1 bis 3,
**dadurch gekennzeichnet,**
**dass** das Flüssigkeitsfilter (1) als Kraft- oder Schmierstofffilter in einem Verbrennungsmotor eines Kraftfahrzeugs ausgebildet ist.

5. Flüssigkeitsfilter nach einem der Ansprüche 1 bis 4,
**dadurch gekennzeichnet,**
**dass** der Wasserstandsensor (6) lanzenartig ausgebildet ist.

6. Flüssigkeitsfilter nach einem der Ansprüche 1 bis 5,
**dadurch gekennzeichnet,**
**dass** der Wasserstandsensor (6) und zumindest ein weiteres elektrisches Funktionselement (10) eine gemeinsame Masseleitung verwenden.

7. Flüssigkeitsfilter nach einem der Ansprüche 1 bis 6,
**dadurch gekennzeichnet,**
- **dass** im Bereich der Heizeinrichtung (14), bzw. des weiteren Funktionselements (10) eine Auswerteinheit (16), insbesondere in der Art einer Platine, vorgesehen ist, die die vom Wasserstandsensor (6) erfassten Sensordaten auswertet und an beispielsweise die Motorsteuerung weiterleitet, oder
- **dass** das weitere Funktionselement (10) als Auswerteeinheit (16) ausgebildet ist.

## Claims

1. Liquid filter (1)
- with a filter housing cover (7) made of plastic, that contains an acceptance chamber (3) for a ring filter element (4) installed in it for filtering a liquid,
- with a water accumulator (5) arranged below the ring filter element (4) to collect the water extracted from the fluid,
- with a water level sensor (6) which protrudes through the filter housing cover (7) and an internal chamber of the ring filter element (4) into the water accumulator (5), and which is connected to a coupling point (9) via electrical leads (8),
- wherein a standpipe (11) is provided in the filter housing cover (7) which protrudes into the internal chamber of the ring filter element (4) and at least partially into the water accumulator (5), inside which the water level sensor (6) is guided,
- wherein at least one further electrical functional element (10) is provided, which is similarly connected electrically via the coupling point (9),
**characterised in**
- **that** the electrical leads (8) and the water level sensor (6) are at least partially embedded in the plastic of the filter housing cover (7) or are over-moulded with the plastic of the filter housing cover (7),
- **that** the standpipe (11) is formed integral to the filter housing cover (7).

2. Liquid filter according to Claim 1, **characterised in that** at least one further functional element (10) is formed as heating equipment, as pressure sensor or temperature sensor.

3. Liquid filter according to Claim 1 or 2, **characterised in that** the connection point (9) is at least partially embedded in the plastic of the filter housing cover (7).

4. Liquid filter according to one of the Claims 1 to 3, **characterised in that** the liquid filter (1) is formed as a fuel filter or a lubricant filter in an internal combustion engine of a motor vehicle.

5. Liquid filter according to one of the Claims 1 to 4, **characterised in that** the water level sensor (6) is formed as a lance.

6. Liquid filter according to one of the Claims 1 to 5, **characterised in that** the water level sensor (6) and at least one further functional element (10) use a common earth lead.

7. Liquid filter according to one of the Claims 1 to 6, **characterised in**
- **that** an assessment unit (16) has been provided in the region of the heating equipment (14) or of the further functional element (10), in particular in the form of a board, which assesses the sensor data recorded by the water level sensor (6) and transfers it onwards for example to the engine control unit, or
- **that** the further functional element (10) is formed as an assessment unit (16).

## Revendications

1. Filtre de liquide (1),
- comprenant un couvercle de boîtier de filtre (7) en plastique, qui contient un espace de réception (3) pour un élément filtrant annulaire (4) inséré dans ce dernier, servant à filtrer un liquide,
- comprenant un espace collecteur d'eau (5) disposé sous l'élément filtrant annulaire (4), servant à collecter de l'eau séparée du liquide,
- comprenant un capteur de niveau d'eau (6), qui dépasse dans l'espace collecteur d'eau (5) par le couvercle de boîtier de filtre (7) et par un espace intérieur de l'élément filtrant annulaire (4), et qui est relié à un emplacement de couplage (9) par l'intermédiaire de lignes électriques (8),
- dans lequel un tuyau vertical (11) dépassant à l'intérieur de l'espace intérieur de l'élément filtrant annulaire (4) et au moins en partie de l'espace collecteur d'eau (5) est disposé au niveau du couvercle de boîtier de filtre (7), à l'intérieur duquel le capteur de niveau d'eau (6) est guidé,
- dans lequel au moins un autre élément fonctionnel (10) électrique est prévu, lequel est couplé de manière électrique également par l'intermédiaire de l'emplacement de couplage (9),
**caractérisé en ce**
- **que** les lignes électriques (8) et le capteur de niveau d'eau (6) sont intégrés au moins en partie dans le plastique du couvercle de boîtier de filtre (7) ou sont surmoulés avec le plastique du couvercle de boîtier de filtre (7),
- **que** le tuyau vertical (11) est réalisé d'un seul tenant avec le couvercle de boîtier de filtre (7).

2. Filtre de liquide selon la revendication 1,
**caractérisé en ce**
**que** l'au moins un autre élément fonctionnel (10) est réalisé sous la forme d'un système de chauffage, sous la forme d'un capteur de pression ou sous la forme d'un capteur de température.

3. Filtre de liquide selon la revendication 1 ou 2,
**caractérisé en ce**
**que** l'emplacement de couplage (9) est intégré au moins en partie dans le plastique du couvercle de boîtier de filtre (7).

4. Filtre de liquide selon l'une quelconque des revendications 1 à 3,
**caractérisé en ce**
**que** le filtre de liquide (1) est réalisé sous la forme d'un filtre à carburant ou à lubrifiant dans un moteur à combustion interne d'un véhicule automobile.

5. Filtre de liquide selon l'une quelconque des revendications 1 à 4,
**caractérisé en ce**
**que** le capteur de niveau d'eau (6) est réalisé à la manière d'une lance.

6. Filtre de liquide selon l'une quelconque des revendications 1 à 5,
**caractérisé en ce**
**que** le capteur de niveau d'eau (6) et au moins un autre élément fonctionnel (10) électrique utilisent une ligne de masse commune.

7. Filtre de liquide selon l'une quelconque des revendications 1 à 6,
**caractérisé en ce**
- **que** dans la zone du système de chauffage (14) ou de l'autre élément fonctionnel (10), une unité d'analyse (16) est prévue, en particulier à la manière d'une platine, laquelle analyse les données de capteur détectées par le capteur de niveau d'eau (6) et les transfère par exemple à la commande de moteur, ou
- **que** l'autre élément fonctionnel (10) est réalisé sous la forme d'une unité d'analyse (16).
